# EUROPEAN PATENT APPLICATION

(11) **EP 1 018 306 A1**
(43) Date of publication of application: **12.07.2000**
(21) Application number: 99125872.4
(22) Date of filing: 24.12.1999
(51) Int. Cl.: A23N 12/02

(54) **Machine for prolonging the shelf-life of vegetables and fruits**

(30) Priority: 28.12.1998 IL 12775598
(71) Applicant: Kibbutz Lotan Technology Center Ltd., Kibbutz Lotan, D.N. Chevel Eilot, 88855 Israel (IL)
(72) Inventor: Mayan, Arie, D.N. Chevel Eilot 88855 (IL)
(74) Representative: Modiano, Guido, Dr.-Ing.

(57) **Abstract**

Machine for the cleaning and decontamination of vegetable and fruit products, which comprises a frame; a plurality of brushes mounted on the frame, which support and advance the product, and are arranged in at least two successive sections, a cold washing section and a hot washing section; sprinklers for delivering cold water in the cold washing section; and sprinklers for delivering hot water in the hot washing section. The mounting of the brushes on the frame is sealed against the penetration of water and/or humidity.

## Description

### Field of the Invention

This invention relates to a machine for prolonging the shelf life of vegetables and fruits by a non-cleaning process which exterminates fungus and bacteria that are located on their surfaces, and more particularly to the structure of a machine that washes and brushes vegetables and fruits and is particularly efficient and durable under operating conditions.

### Background of the Invention

It is highly desirable to eliminate fungus and bacteria and any other polluting matter from the surface of products intended for human consumption, in particular vegetables and fruits. The word "products" as used hereinafter, should be construed as comprising all such products.

Among other things, cleaning and decontaminating the surface of products prolongs their shelf life and allows late harvesting that leads to better taste, better appearance, larger size, and better prices of the products. The art, however, does not include means for non-chemical treatments that achieve satisfactory cleaning and decontamination, while chemical treatments of food products are obviously undesirable.

In order to clean and decontaminate food products, they should be subjected to a liquid and mechanical treatment, specifically to washing and brushing. To effect this on an industrial scale, a machine is required that includes washing and brushing means. However, such a machine is subject to deterioration by rusting and corrosion due to the wash water and its operation and lifetime are thus undesirably affected.

It is therefore a purpose of this invention to provide a machine for cleaning and decontaminating the surface of vegetable and fruit products that concurrently provides liquid and mechanical treatment of the products and that is highly efficient and durable.

It is another purpose to provide such a machine which causes said products to have a longer shelf life, e.g., longer by 7 to 10 days than that of products which have not been treated according to the invention.

It is a further purpose to provide such a machine which carries out washing and brushing of the food products and does not suffer from deterioration caused by the washing water and/or by humidity penetrating into sensitive zones of the machine.

It is a still further purpose to provide such a machine which in which the moving mechanical parts are protected against water and humidity.

It is a still further purpose to provide supports for the rotatable parts of such a machine, and particularly the axes of the brushes, which avoid infiltration of water and/or humidity.

Other purposes and advantages of the invention will appear as the description proceeds.

### Summary of the Invention

The process and the machine according to the invention are based on the concurrent washing and brushing of the product surface, at increasing temperatures. The temperatures used are preferably from 45° to 65°C.

The process according to the invention comprises carrying out, continuously and in succession, for predetermined lengths of time, the following operations:
a first washing of the vegetable or fruit product by sprinkling it with cold water - by which is meant herein water at the temperature at which it issues from the water main - while brushing its surface;
a second washing of the product by sprinkling it with recycled hot water, preferably at a temperature between 45° and 65°C, while continuing said brushing;
a drying of the product by blowing warm air on it.

The cold water is fed directly from the main and discharged directly to the sewer. The hot water may also be continuously supplied and discharged, but preferably it is recycled with the addition of fresh heated water for compensating the losses. For example, a thermally insulated hot water tank may be provided to feed the hot water spraying system, and the water recovered after spraying may be recycled to the tank, to which fresh heated water is also supplied. The continuous replacement of part the hot water prevents the accumulation of dirt in the tank.

Concurrently brushing the product and sprinkling it with cold and hot water fully cleans and decontaminates its surface and increases its shelf life.

The machine according to the invention comprises
a frame;
an elevator-feeding section for feeding the product to be treated into the machine and causing it to advance along the same;
a plurality of brushes mounted on said frame, over which the product travels, and which are arranged in two successive section: cold washing section and hot washing section;
sprinklers for delivering cold water in said cold washing section;
sprinklers for delivering hot water in said hot washing section;
a drying section, having rollers for advancing the product; and
heater and fan means for blowing heated drying air in said drying section.

Further, the machine optionally comprises safety means for stopping the machine in the case of malfunction, particularly in the feeding section, or in the case that the feed of the product ceases. Also, preferably, the machine is combined with a thermally insulated hot water tank, a heater if hot water is not available otherwise, pump and conduit means for feeding hot water to the hot water sprinklers, and conduit means for recycling hot water from the hot water section to said tank. Conduit and, if needed, pump means are also preferably provided for continuously feeding to said tank the amount of water required to replace the losses in the hot water sprinkling section.

In some embodiments of the invention, particularly for the treatment of melons, the machine additionally includes a waxing device located after the drying section, and a second, final drying section.

The brushes are cylindrical, supported in the frame of the machine, and synchronically driven by any suitable mechanical drive, e.g. the brushes are provided each with a driven gear, and an electric motor drives a drive shaft extending along the length of the machine and having keyed thereto a drive gear for each brush.

Control means is preferably provided for adapting, according to the particular product being treated, the product feed rate, the speed of rotation of the brushes, the rate at which cold water and hot water are sprinkled over the product, and the flow rate of the heated air and its temperature.

Examples of products which can be treated by the process and the machine of the invention are peppers, melons, corn, kumquats, tomatoes, cherry tomatoes, mango, citrus, avocado, plums, pears, and the like. It has been shown, for instance, that melons, that begin to mold and are spoiled after 16 days from harvesting, are still in perfect condition when treated on the machine of the invention after more than 20 days from harvesting.

### Brief Description of the Drawings

In the drawings:
- Fig. 1 is a schematic perspective view of a machine according to an embodiment of the invention;
- Fig. 2 is a schematic, vertical side view of a washing and brushing machine according to a modified embodiment of the invention, certain parts being omitted;
- Fig. 3 is a schematic vertical cross-section of the machine of Fig. 2;
- Fig. 4 is a vertical view, at a larger scale, of a brush and its supports according to an embodiment of the invention; and
- Figs 5 and 6 are cross-sections at an enlarged scale of the left and right support of Fig. 4, respectively.

### Detailed Description of the Invention

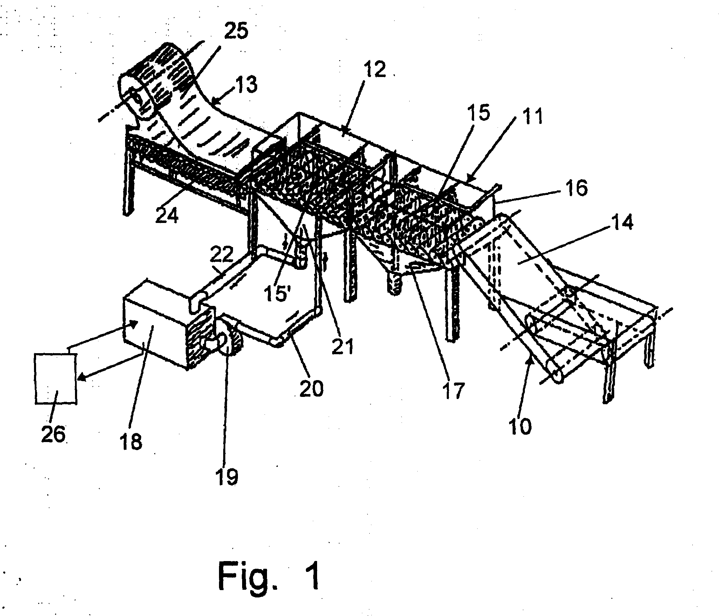

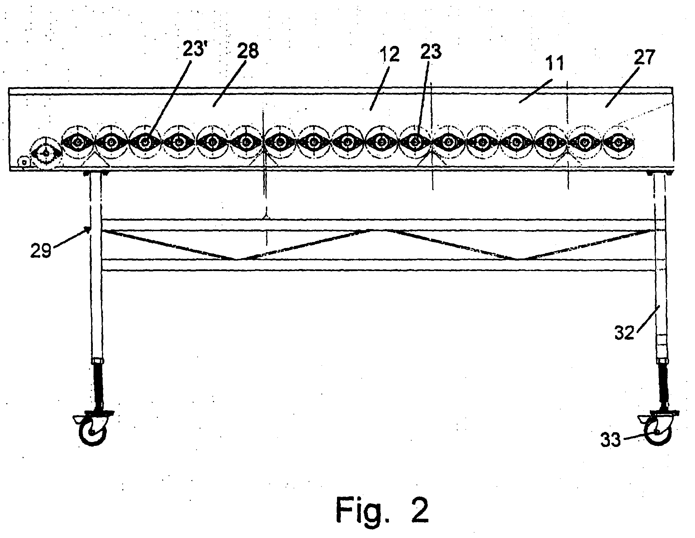

As schematically shown in Fig. 1, the washing and brushing section, a product receiving apparatus 10 and a drying apparatus 13, the end of which constitutes a delivery stage. These apparatuses can constitute separate machines having each its own frame and activating means, or can be combined into a single machine with a cold washing and brushing section 11 and a hot washing and brushing section 12. Said washing and brushing sections, however, can constitute a separate machine, as illustrated in Fig. 2, cooperating with a receiving and a drying apparatus, and anyway the present invention is directed essentially to them. The receiving apparatus 10 comprises elevator means, such as a belt 14, for lifting the product to the level of the brushes and concurrently imparting to it the advancing motion that will cause it travel over the brushes and through the length of the machine. The washing sections 11 and 12 are respectively provided with sprinklers 15 and 15', of any suitable construction. Cold water is fed to sprinklers 15 from the water network, at the pressure of said network, by conventional means schematically represented by pipe 16, broken off; and after having contacted the product, is discharged through discharge funnel 17 to the sewer. Hot water, at a temperature from 45° to 65°C, is stored in thermally insulated tank 18, which is preferably combined with a heater 26, the water circulating between said tank and said heater, as shown by the arrows. The hot water is fed to sprinklers 15' by pump 19 through conduit 20. After having contacted the product, the hot water is collected in funnel 21 and recycled by gravity (or, if needed, by means of a pump, not shown) though conduit 22 to tank 19. Replacement water is also fed to tank 19 from the water supply network through conduit means, not shown. Valves required for the convenient operation of the machine may be provided and are not shown, as they are conventional. In the washing sections, brushes, generally indicated at 23 but better illustrated in Figs. 2 to 4, are provided, and brush the product as it advances along the machine due to the impulse received by the elevator means 14. After the second washing-brushing, the product passes to the drying apparatus 13, in which it travels over rollers 24. Said rollers may be cylindrical and made of metal or plastic or of spongy material, or may be brushes, or be of any convenient type, since their only purpose is to advance the product through the drying section while being dried by hot air provided by heater-fan 25. For this purpose they are driven in any convenient way, e.g. by means of sprocket chains driven by toothed wheels. The treated product may be collected in any suitable way, e.g. in containers placed at the appropriate level.

Fig. 2 is a schematic vertical side view of a washing and brushing machine, which can be combined with loading and drying apparatus,. The machine of Fig. 2 has a frame, generally indicated at 29, which comprises legs 32, supported by wheels 33, which render it mobile, but could be otherwise supported and generally shaped; and it comprises a plurality of brushes 23, supported therein as hereinafter described. It comprises a feeding section 27, cold and hot washing and brushing sections 11 and 12, which are similar to those of Fig. 1, and additionally a final brushing section 28, in which no water is sprinkled, but the product is brushed by brushes 23' which wipe from the product water drops that may cling to it as a result of the cold and hot washing. The brushes may but need not be of the same type in all sections of this machine, though they will always be supported according to the invention.

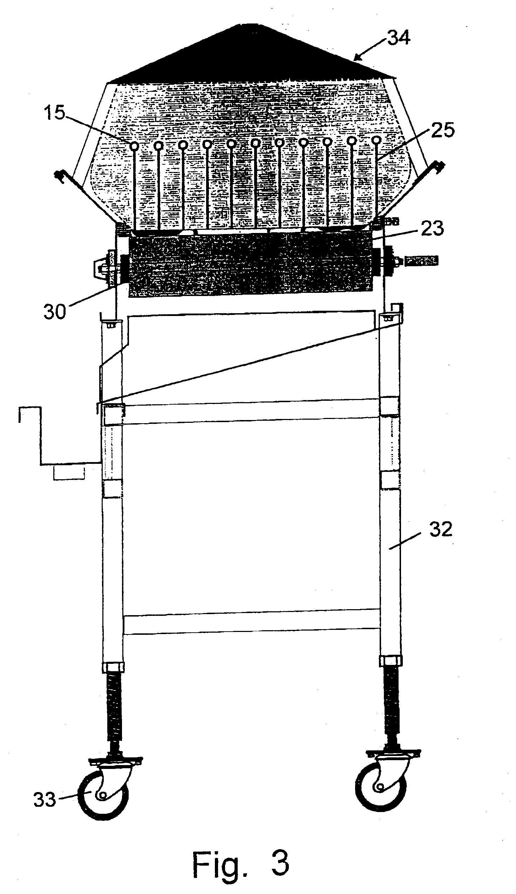

As seen in Fig. 3, which is a vertical cross-section of the machine taken anywhere in the cold or hot washing section, in a position intermediate two successive brushes, the machine is provided with a cowling 34 (omitted in Fig. 2) which protects the sprinklers. Numeral 15 indicates the cold water sprinklers, that are connected to the water network, as seen in Fig. 1. The hot water sprinklers 15' are similar. In the schematic illustration of this embodiment, they are fed with hot water from tank 19, as illustrated in Fig. 1, but they could be so fed from a heater inserted in a conduit leading from the water main. The flow rate of the water can be controlled as desired, depending on the product and on the pressure available, e.g. by means of valves, not illustrated since they are conventional.

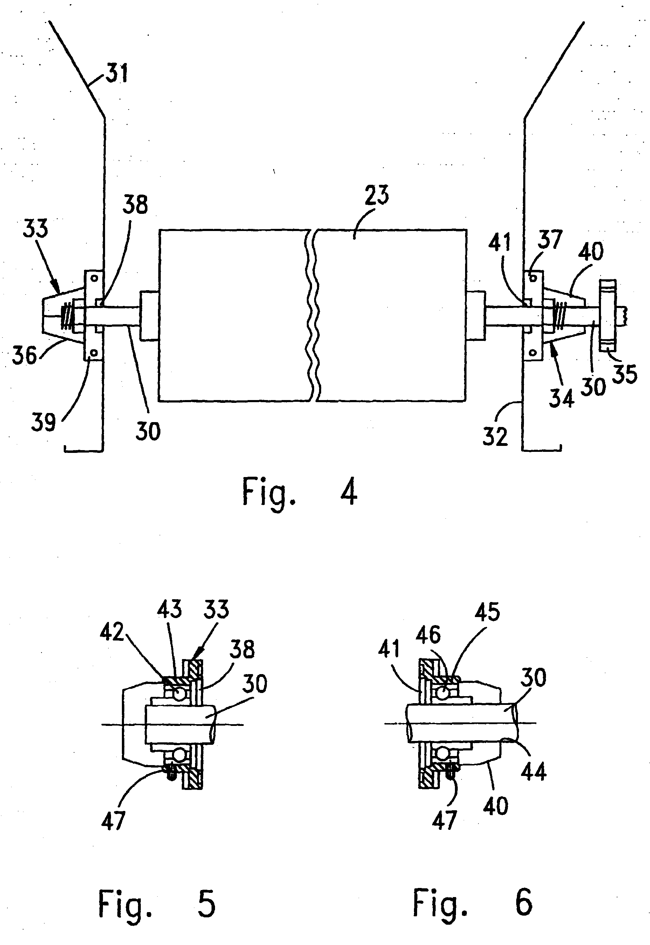

The brushes 23, preferably, but not necessarily, spiral brushes, one of which is illustrated as a detail in Fig. 4, are the most important mechanical component of the machine according to the invention. In order to show the support at an enlarged scale, the brush 23 has been centrally broken off in the figure. The brushes are supported, in the embodiment illustrated, by a shaft 30, which is mounted in supported generally indicated at 33 and 34, mounted on side panels 31 and 32, which are attached to or part of the machine frame. Since shaft 30 is driven from its right side, as seen in Fig. 4, this side will be called hereinafter "the drive side" and the other side (the left in Fig. 4) will be called "the support side".

Numeral 36 indicates a sealed cover, preferably of plastic, covering the end of shaft 30 at the support side. Numeral 39 indicates a support covered with plastic matter, between which and side panel 31 is provided a back seal 38, which is preferably an O-ring of natural or synthetic rubber. Nut 39 secures the aforesaid elements against said side panel. On the drive side, a plastic cover 40 is provided, which has an opening for permitting the passage of the shaft 30, so that the shaft may extend outside cover 40 and has a toothed wheel 35 keyed thereto at its end. Instead of a toothed wheel, the shaft could have other mechanical means for driving it keyed or otherwise fixed to it. 37 is a support covered with thermoplastic matter and 41 is another back seal, preferably a rubber O-ring, interposed between said support 37 and side panel 32. Toothed wheel 35 is driven by a chain, not shown, and actuated by a drive motor, also not shown.

Fig. 5 illustrates in cross-section, at an enlarged scale, support 33 which is on the support side. It is seen that shaft 30 rotates in a ball-bearing 42 housed in a support casing 43 and the position of seal 38 is shown.

Fig. 6 illustrates in the same manner as Fig. 5 support 34 which is on the drive side. It is seen that cover 40 has an aperture 44 for the passage of shalt 30. Support 34 has a casing 45 which houses a ball-bearing 46 and the seal 41.

In both figures points 47 are lubricating points. Although ball bearings and O-rings have been illustrated, this should not be intended as a limitation, since persons skilled in the at can choose a different type of bearing and a different type of seal. In general the seals are of elastomeric material, such as rubber, or of plastomeric material.

While an embodiment of the invention has been described by way of illustration, it should be understood that it is not limiting and that many variations, modifications and adaptations can be carried out in the process and the machine of the invention, without exceeding the scope of the claims.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. Machine for the cleaning and decontamination of vegetable and fruit products, which comprises:
I - a frame;
II - a plurality of brushes mounted on said frame, which support and advance the product, and which are arranged in at least two successive sections: cold washing section and hot washing section;
III - sprinklers for delivering cold water in said cold washing section; and
IV - sprinklers for delivering hot water in said hot washing section;
the mounting of said brushes on said frame being sealed against the penetration of water and/or humidity.

2. Machine according to claim 1, wherein the brushes are keyed to shafts supported by the frame of the machine by supports provided with seals against the penetration of water and/or humidity.

3. Machine according to claim 2, wherein the shafts of the brushes are supported by supports fixed to the frame of the machine.

4. Machine according to claim 3, wherein the brushes are keyed to shafts are mounted on plates being part of or solid with the frame of the machine.

5. Machine according to claim 2, wherein the shafts of the brushes are supported by supports sealed against the penetration of water and/or humidity by elastomeric or plastomeric seals.

6. Machine according to claim 5, wherein the seals are 0-rings, and wherein the seals are preferably made of rubber.

7. Machine according to claim 2, wherein the supports comprise ball bearings; or
wherein the ends of the brushes shafts are covered on the support side by a close clover and on the drive side by a cover having an aperture for the shaft to extend outside the cover.

8. Machine according to claim 7, wherein the ends of the brushes shafts extending outside the cover on the drive side have mechanical means fixed thereto for driving the shaft, and wherein preferably the means for driving the shaft are toothed wheels.

9. Machine according to claim 4, comprising means for pressing the supports of the brushes shafts and their seals against the plates.

10. Machine according to one or more of claims 1-9, further comprising a brushing section for wiping the product.

11. Machine according to one or more of claims 1-10, wherein the machine is combined with a loading apparatus; and/or
wherein the machine is combined with a drying apparatus which comprises rollers for advancing the product, fans for blowing drying air thereon, and heater mean for heating the drying air.

12. Machine according to one or more of claims 1-10, further comprising safety means for stopping the machine in the case of malfunction or in the case that the feed of the product ceases; and/or
further comprising a hot water tank and a water heater; and/or
which comprises a mechanical drive for synchronically driving the brushes, wherein the mechanical drive preferably comprises a sprocket chain extending along the length of the machine; and/or
for treating a product chosen from among for peppers, melons, corn, persimmon, kumquats, tomatoes, cherry tomatoes, mango, citrus, avocado, plums, and pears.

13. Support for supporting shafts in a machine for the cleaning and decontamination of vegetable and fruit products by washing and brushing, which comprises a casing for mounting it on said machine, a bearing housed therein, and a seal sealing the bearing against water and/or humidity.

14. Support according to claim 13, wherein the seal is an 0-ring of elastomeric or plastomeric material, and wherein the seal is preferably /made of rubber.
